# EUROPÄISCHE PATENTSCHRIFT

(11) **EP 0 475 013 B1**
(45) Veröffentlichungstag und Bekanntmachung des Hinweises auf die Patenterteilung: **28.12.1994**
(21) Anmeldenummer: 91111614.3
(22) Anmeldetag: 12.07.1991
(51) Int. Cl.: G01C 19/72

(54) **Faserkreisel**
Optical fibre gyroscope
Gyroscope à fibre optique

(30) Priorität: 27.08.1990 DE 4027024
(43) Veröffentlichungstag der Anmeldung: 18.03.1992
(73) Patentinhaber: Alcatel SEL Aktiengesellschaft, D-70435 Stuttgart (DE)
(72) Erfinder: Regener, Rolf, Dr., W-7060 Schorndorf (DE)
(74) Vertreter: Pohl, Herbert, Dipl.-Ing.

(56) Entgegenhaltungen:
- EP-A- 0 092 831
- EP-A- 0 092 831
- EP-A- 0 141 331
- US-A- 4 265 541
- US-A- 4 890 895
- OPTICAL FIBER SENSORS, 1988 TECHNICAL DIGEST SERIES, New Orleans, Louisiana, 27. - 29. Januar 1988, Band 2, Teil 2, Seiten 385-392, Optical Society of America, Washington, DC, US; W.J. MINFORD et al.: "Interferometric fiber optic gryoscope using a novel 3X3 integrated optic polarizer/splitter"
- NEUES AUS DER TECHNIK, Nr. 3, 15. September 1989, Seite 3, Würzburg, DE; "Halbleiterdiodenlaser mit Wellenleiter und integriertem optischem Glasfasergyroskop"
- LASER UND OPTOELEKTRONIK, Band 21, Nr. 1, Februar 1989, Seiten 57-63, Stuttgart, DE; C. WULF-MATHIES: "Integrierte Optik für Faseroptische Sensoren"

## Beschreibung

Die Erfindung betrifft einen Faserkreisel zur Messung von Drehgeschwindigkeiten der im Oberbegriff des Anspruchs 1 näher bezeichneten Ausführung.

Ein der Messung von Drehgeschwindigkeiten dienender Faserkreisel ist in der Druckschrift "Elektrisches Nachrichtenwesen, Band 61, Nr. 4, 1987, Seiten 372 bis 378" beschrieben. Bei dem Faserkreisel sind die optischen und die elektrooptischen Funktionseinheiten in einem von den elektrischen Funktionseinheiten getrennten Gehäuse angeordnet. Das Gehäuse enthält im wesentlichen ein Lasermodul, ein Detektormodul und ein zwischen diese und eine Faserspule gekoppeltes IOC-Modul, bei dem auf einem LiNbO₃-Substrat ein Koppler, ein Polarisator, ein Phasenmodulator und ein Strahlteiler integriert sind. Die Licht leitenden Strukturen bestehen bei dem IOC-Modul aus Titan.

Die Herstellungskosten insbesondere des Optikteiles sind jedoch beträchtlich, wodurch der Anwendungsbereich solcher Faserkreisel stark eingeschränkt ist. Um optimale Funktionswerte zu erreichen, müssen bei der Ankopplung der Lichtwellenleiter an Laser und Detektor einerseits und an das IOC-Modul andererseits sowie bei der Ankopplung der Enden der Faserspule an das IOC-Modul, äußerst kleine, im Submikrometerbereich liegende Toleranzen eingehalten werden. Dies erfordert aber sehr zeitaufwendige, teure Justierarbeit.

Ein Faserkreisel nach dem Oberbegriff des Anspruchs 1 ist aus der EP-A-0 141 331 bekannt. Bei dem Faserkreisel sind auf einem Substrat aus Aluminiumkeramik ein Laser, ein Isolator und eine elektrische Schaltung angeordnet, die der Steuerung eines Phasenmodulators dient. Außerdem ist auf dem Keramiksubstrat ein IOC-Modul aus LiNbO₃ befestigt, das aus Titan hergestellte Wellenleiter aufweist. Der Laser ist über den Isolator von außen an das IOC-Modul gekoppelt, dessen optische Wellenleiter als Strahlteiler, Koppler und Modulator ausgebildet sind. Ein Zweig des Modulators endet vor einem auf dem IOC-Modul fixierten Detektor, während zwei andere Zweige durch je einen Koppler zu Anschlüssen einer externen Faserspule führen. Die Verbindung der Faserspulenenden mit den optischen Wellenleitern des IOC-Moduls ist mittels einer aus einem Glasstab und einem Siliziumplättchen zusammengesetzten Halterung realisiert. Die am Keramiksubstrat und IOC-Modul befestigte Halterung hat eine ausschließlich mechanische Funktion.

Die Druckschrift "Laser und Optoelektronik, Band 21, Nr. 1, Februar 1989, Seiten 57 bis 63" offenbart außerdem ein Sagnac-Interferometer (Bild 1) und beschreibt anhand von Bild 8 die Integrationsschritte der optischen Schaltung für einen Faserkreisel. Obwohl für die Herstellung der hier aus Koppler, Polarisator, Strahlteiler und Modulator bestehenden integrierten Optik als zur Verfügung stehende Technologie unter anderem eine auf Siliziumbasis beruhende erwähnt ist, wird das Herstellungsverfahren anhand eines LiNbO₃-Substrates abgehandelt, in das optische Wellenleiter aus Titan integriert sind.

In der US-A-4 890 895 ist ferner die Herstellung eines optoelektronischen Bauelementes beschrieben, bei dem auf einem Siliziumsubstrat eine Laserdiode, ein Detektor und eine elektrische Schaltung integriert sind. Außerdem ist an Laserdiode und Detektor je eine in einer Nut des Siliziumsubstrates fixierte Glasfaser angekoppelt.

Aufgabe der Erfindung ist es, den Faserkreisel zu verbessern, so daß bei seiner Herstellung weniger Justierarbeit anfällt und er außerdem mit geringeren Gestehungskosten in Großserienfertigung produziert werden kann. Gelöst wird diese Aufgabe durch einen Faserkreisel mit den Merkmalen des Anspruchs 1. In den Unteransprüchen sind weitere Ausgestaltungen des Faserkreisels angegeben.

Die erfindungsgemäß auf einem einzigen Substrat realisierten Funktionseinheiten des Faserkreisels haben den Vorteil, daß zumindest in der einfachen Ausführung die Justierung der Faserankopplungen an Lichtquelle, Detektor und IOC-Modul entfallen. Sie sind auf dem sehr kostengünstig herstellbaren Substratmaterial Silizium aufgebaut, das mit gut beherrschbaren Fertigungstechniken präzise bearbeitet werden kann. Außerdem können auf das Substrat wahlweise einzelne oder sämtliche elektrische Funktionseinheiten mit integriert und solche Substrate im Nutzen gefertigt werden, wodurch eine weitere Reduzierung der Herstellungskosten erzielbar ist. Kostenintensive Einzelanfertigungen entfallen. Das mit einer geeigneten Montagegrube herstellbare Substrat gestattet es schließlich als Lichtquelle einen preiswerten handelsüblichen Laserchip einzusetzen, wie er bei CD-Plattenspielern verwendet wird.

Die Erfindung wird anhand von in Zeichnungen schematisch dargestellten Ausführungsbeispielen wie folgt näher erläutert. In den Zeichnungen zeigen:
- Fig. 1: ein erstes Ausführungsbeispiel einer hochintegrierten Funktionseinheit mit einer daran angekoppelten Faserspule;
- Fig. 2: ein zweites Ausführungsbeispiel einer hochintegrierten Funktionseinheit mit einer daran angekoppelten Faserspule;
- Fig. 3: ein drittes Ausführungsbeispiel einer hochintegrierten Funktionseinheit mit drei daran angekoppelten Faserspulen;
- Fig. 4: ein viertes Ausführungsbeispiel einer hochintegrierten Funktionseinheit mit drei daran angekoppelten Faserspulen.

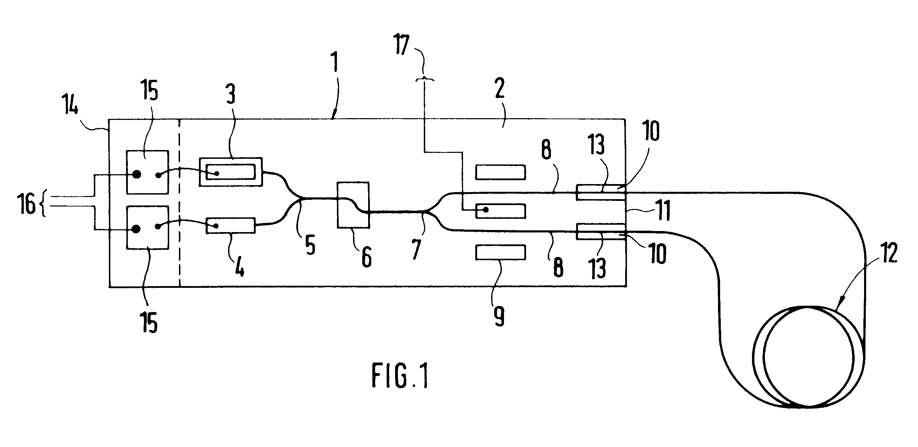

In den Fig. 1 bis 4 ist die neue hochintegrierte Funktionseinheit des Faserkreisels insgesamt mit 1 bezeichnet. Sie besteht aus mehreren optischen Funktionseinheiten, wie z.B. Koppler, Polarisatoren und Strahlteiler sowie mehreren elektrooptischen Funktionseinheiten, wie z.B. Lichtquelle, Detektoren und Phasenmodulatoren. Die Basis der hochintegrierten Funktionseinheit 1 ist ein Substrat 2 aus Silizium, auf dem mehrere optische und elektrooptische Funktionseinheiten integriert und durch integrierte Lichtwellenleiter miteinander verbunden sind. Bei den einzelnen Funktionseinheiten handelt es sich nach Fig. 1 um eine Lichtquelle 3, zum Beispiel um einen Laser mit kurzer Kohärenzlänge, einen daneben angeordneten Detektor 4 und einen davor angeordneten, optisch mit der Lichtquelle und dem Detektor verbundenen Koppler 5. Dessen einbahniges Ende ist durch einen Polarisator 6 geführt und optisch an einen Strahlteiler 7 mit Y-Verzweigung gekoppelt. Die Äste 8 der Verzweigung durchlaufen dann einen Modulator 9 und enden jeweils am Beginn einer Nut 10, die sich nebeneinander bis zu einer Außenkante 11 des Substrates 2 erstrecken. In den Nuten 10 sind die Spulenenden 13 der Faserspule 12 optisch an die Äste 8 des Strahlteilers 7 gekoppelt und mechanisch fixiert.

In der Nähe von Lichtquelle 3 und Detektor 4 sind vorzugsweise zwischen diesen Funktionseinheiten und einer benachbarten Außenkante 14 des Substrates 2 beispielsweise zwei Areale 15 vorgesehen, die bei einer einfacheren Ausführung der hochintegrierten Funktionseinheit 1 als Anschlußflächen zur Herstellung von Bondverbindungen zu den elektrooptischen Funktionseinheiten ausgebildet sind und mit denen außerdem die von den elektrischen Funktionseinheiten des Faserkreisels (nicht dargestellt) ankommenden Steuerleitungen 16, 17 für die elektrooptischen Funktionseinheiten verbunden sind. Bei einer komplexeren Ausführung der hochintegrierten Funktionseinheit 1 enthalten die Areale 15 entweder Teilfunktionen der elektrischen Funktionseinheiten, wie z.B. Vorverstärkerschaltung für den Detektor 4 und die Treiberschaltung für den Laser oder sämtliche elektrische Funktionseinheiten.

Für den Aufbau der passiven Funktionseinheiten auf Si dienen mit Phosphor oder auch mit Germanium dotierte SiO₂-Wellenleiter, die in ihren Modenfeldern gut an den aus einer polarisationserhaltenden Glasfaser bestehenden Wellenleiter der Faserspule 12 angepaßt werden können und Si₃N₄-Wellenleiter, die gut an das Modenfeld des Lasers (Lichtquelle 3) angepaßt werden können. Si₃N₄ und SiO₂ werden insbesondere auch zur Herstellung des Polarisators 6 verwendet. Für den Detektor 4 ist Si ohnehin ein ausgezeichnetes Basismaterial. Durch eine Dotierung mit Ge wird der Wellenlängenbereich des Detektors 4 erforderlichenfalls ausgeweitet. Der Modulator 9 besteht aus in das Substrat 2 diffundiertes oder epitaktisch aufgewachsenes Germanium oder einem Si-Ge Mischkristall.

Die Nuten 10 zur Halterung der Spulenenden 13, die z.B. einen V-förmigen oder auch U-förmigen Querschnitt haben können, werden mittels bekannter Ätztechniken hergestellt. Mit diesen Techniken (wie z.B. anisotropes Ätzen oder chemisches Ätzen) kann auch eine sehr eng tolerierte Montagegrube für die justierfreie Aufnahme einer handelsüblichen Laserdiode ausgehoben werden. Außer der hybrid integrierten Lichtquelle 3, kann diese aber auch monolithisch aus GaAlAs in Form von Multiquantumwell-Schichten epitaktisch aufgewachsen sein.

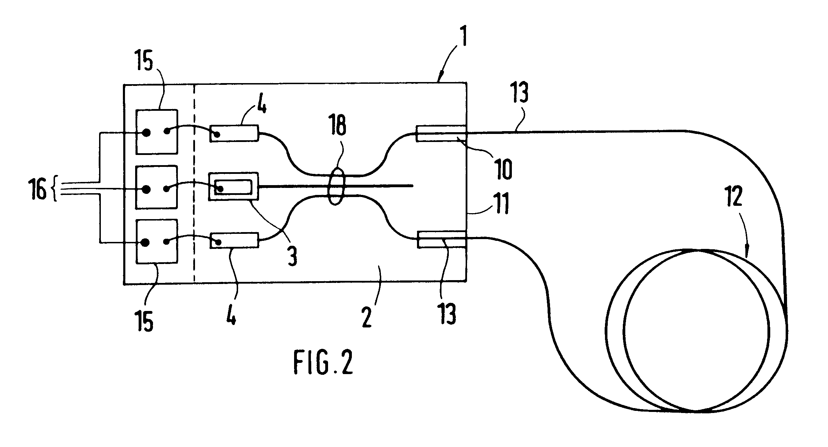

Bei der hochintegrierten Funktionseinheit 1 der Fig. 2 ist auf zwei voneinander abgewandten Seiten der Lichtquelle 3 je ein Detektor 4 angeordnet. An diese drei Funktionseinheiten sind die eingangsseitigen Zweige eines 3x3-Kopplers 18 gekoppelt. Von dessen ausgangseitigen Zweigen enden die beiden äußeren wieder an den die Spulenenden 13 haltenden Nuten 10. Der mittlere Zweig des Kopplerausgangs bleibt unbeschaltet. Bedarfsweise kann hier jedoch zur Kontrolle der Eingangsleistung ein zusätzlicher Detektor eingesetzt werden. Der Lichtquelle 3 und den beiden Detektoren 4 sind auf dem Substrat 2 ebenfalls Areale 15 zugeordnet, die den zuvor beschriebenen Funktionen entsprechen.

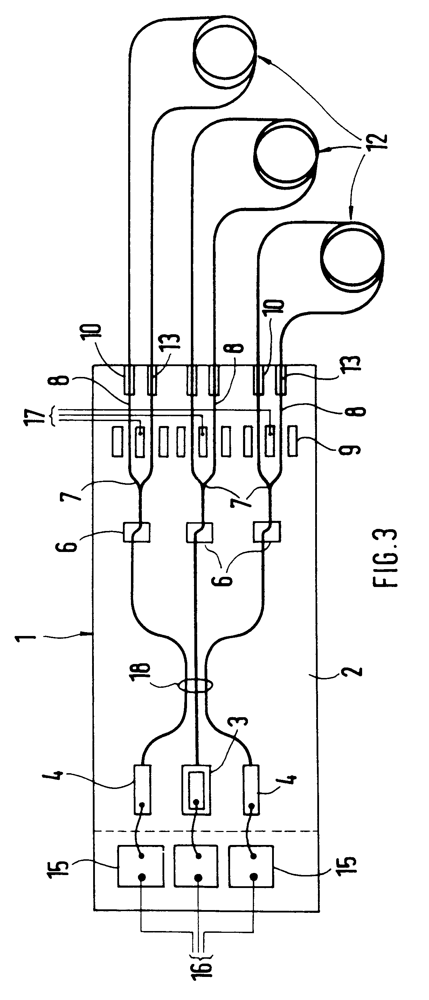

Die hochintegrierte Funktionseinheit 1 der Fig. 3 ähnelt im Aufbau derjenigen der Fig. 2, jedoch ist davon abweichend jeder ausgangsseitige Zweig des 3x3-Kopplers 18 durch einen Polarisator 6 geführt und anschließend an einen Strahlteiler 7 mit Y-Verzweigung gekoppelt. Die Äste 8 der Verzweigung jedes Strahlteilers 7 sind dann wieder paarweise durch einen Modulator 9 geführt und an die Spulenenden 13 einer Faserspule 12 gekoppelt. Eine derartige hochintegrierte Funktionseinheit 1 dient zur Ankopplung von drei Faserspulen 12. Der Damit ausgerüstete Faserkreisel kann daher bei zueinander senkrecht angeordneten Achsen der Faserspulen 12 absolute Drehraten in drei verschiedenen Raumrichtungen messen.

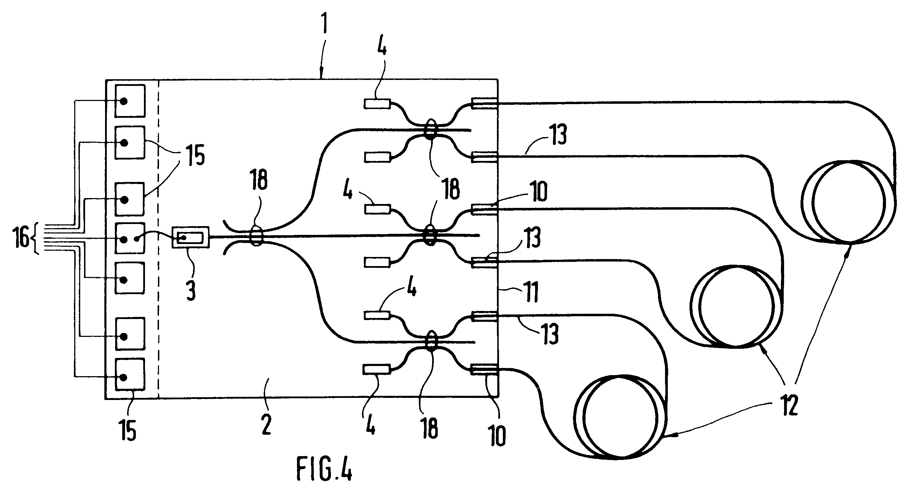

Bei der hochintegrierte Funktionseinheit 1 gemäß Fig. 4 sind auf dem Siliziumsubstrat eine Lichtquelle 3 und davor der mittlere Zweig eines 3x3-Kopplers 18 angeordnet, dessen äußere eingangsseitige Zweige unbeschaltet sind. Auf der Ausgangsseite sind alle drei Zweige des Kopplers 18 jeweils optisch mit dem mittleren Zweig von drei weiteren nachgeschalteten 3x3-Kopplern 18 verbunden, die nebeneinander angeordnet sind. Die beiden äußeren eingangsseitigen Zweige aller drei nachgeschalteten 3x3-Koppler 18 enden vor je einem Detektor 4, während die Enden der beiden äußeren Zweige auf der Ausgangsseite die Schnittstelle zur Ankopplung von drei Faserspulen 12 bilden, deren Faserenden 13 wieder in Nuten 10 des Substrates 2 fixiert sind. Die mittleren Zweige der Ausgangsseite der nachgeschalteten 3x3-Koppler 18 bleiben unbeschaltet oder können zur Kontrolle der Eingangsleistung an Detektoren gekoppelt werden.

## Patentansprüche

1. Faserkreisel zur Messung von Drehgeschwindigkeiten, der im wesentlichen aus elektrischen, optischen und durch Lichtwellenleiter miteinander verbundenen elektrooptischen Funktionseinheiten sowie einer Lichtquelle (3) und mindestens einer Faserspule (12) besteht und bei dem aus Koppler (5) und Strahlteiler (7) bestehende optische sowie aus Detektor (4) und Modulator (9) bestehende elektrooptische Funktionseinheiten auf einem Substrat (2) integriert sind,
**dadurch gekennzeichnet,**
daß auf dem Substrat (2) als optische Funktionseinheit zusätzlich mindestens ein Polarisator (6) und die Lichtquelle (3) als zusätzliche elektrooptische Funktionseinheit integriert ist, daß das Substrat (2) aus Silizium besteht,
daß die in ihren Modenfeldern an den Wellenleiter der Faserspule (12) angepaßten optischen Funktionseinheiten (Strahlteiler 7, Ast 8) aus mit Phosphor oder Germanium dotierten SiO₂-Wellenleitern und die an das Modenfeld der Lichtquelle (3) angepaßten optischen Funktionseinheiten (Koppler 5) aus Si₃N₄-Wellenleitern bestehen,
daß der zwischen den Funktionseinheiten Koppler (5) und Strahlteiler (7) angeordnete Polarisator (6) aus Si₃N₄ oder SiO₂ besteht,
und daß der Modulator (9) aus in das Substrat (2) diffundiertes oder epitaktisch aufgewachsenes Germanium oder einem Si-Ge Mischkristall besteht.

2. Faserkreisel nach Anspruch 1, dadurch gekennzeichnet, daß auf dem Substrat (2) durch Lichtwellenleiter miteinander verbunden eine Lichtquelle (3), mehrere Detektoren (4) und wenigstens ein 3x3-Koppler (18) integriert sind.

3. Faserkreisel nach Anspruch 1, dadurch gekennzeichnet, daß auf dem Substrat (2) durch Lichtwellenleiter miteinander verbunden eine Lichtquelle (3), wenigstens ein Detektor (4), wenigstens ein Koppler (5 oder 18), wenigstens ein Polarisator (6), wenigstens ein Strahlteiler (7) und mehrere Modulatoren (9) integriert sind.

4. Faserkreisel nach einem der Ansprüche 1 bis 3, dadurch gekennzeichnet, daß auf dem Substrat (2) zusätzlich wenigstens eine elektrische Funktionseinheit integriert ist.

5. Faserkreisel nach einem der Ansprüche 1 bis 4, dadurch gekennzeichnet, daß das Substrat (2) eine Montagegrube mit hybrid integrierter Lichtquelle (3) enthält.

6. Faserkreisel nach einem der Ansprüche 1 bis 4, dadurch gekennzeichnet, daß die Lichtquelle (3) aus epitaktisch auf das Substrat (2) aufgewachsenen Multiquantumwell-Schichten besteht.

7. Faserkreisel nach Anspruch 1, dadurch gekennzeichnet, daß das Substrat (2) an den Schnittstellen für die Ankopplung wenigstens einer Faserspule (12) pro Faserspule zwei Nuten (10) für die mechanische Befestigung der Spulenenden (13) aufweist.

## Claims

1. A fiber-optic gyroscope for measuring rotation rates which consists essentially of electrical, optical, and electrooptical functional units and of a light source (3) and at least one fiber coil, with the electrooptical functional units interconnected by optical waveguides, and wherein optical functional units in the form of a coupler (5) and a beam splitter (7) as well as electrooptical functional units in the form of a detector (4) and a modulator (9) are integrated on a substrate (2),
**characterized in**
that at least one polarizer (6) and the light source (3) are integrated on the substrate (2) as additional optical and electrooptical functional units,
respectively, that the substrate (2) is made of silicon, that the optical functional units (beam splitter 7, branch 8) adapted in their modal fields to the waveguide of the fiber coil consist of phosphorus- or germanium-doped SiO₂ waveguides,
that the optical functional units (coupler 5) adapted to the modal field of the light source (3) consist of Si₃N₄ waveguides, that the polarizer (6), which is disposed between the coupler (5) and the beam splitter (7), is made of Si₃N₄ or SiO₂, and that the modulator (9) is formed of germanium diffused into or
epitaxially grown on the substrate (2) or of an Si-Ge mixed crystal.

2. A fiber-optic gyroscope as claimed in claim 1, characterized in that a light source (3), several detectors (4), and at least one 3x3 coupler (18) are integrated on the silicon substrate (2) and inter-connected via optical waveguides.

3. A fiber-optic gyroscope as claimed in claim 1, characterized in that a light source (3), at least one detector (4), at least one coupler (5 or 18), at least one polarizer (6), at least one beam splitter (7), and several modulators (9) are integrated on the silicon substrate (2) and interconnected via optical waveguides.

4. A fiber-optic gyroscope as claimed in claim 2 or 3, characterized in that, in addition, at least one of the electrical functional units is integrated on the silicon substrate (2).

5. A fiber-optic gyroscope as claimed in any one of claims 1 to 4, characterized in that the substrate (2) has a mounting pit containing a hybrid integrated light source (3).

6. A fiber-optic gyroscope as claimed in any one of claims 1 to 4, characterized in that the light source (3) consists of epitaxial multi-quantum-well layers grown on the substrate (2).

7. A fiber-optic gyroscope as claimed in claim 1, characterized in that at the interfaces where said at least one fiber coil (12) is coupled to the substrate (2), the substrate (2) has two grooves (10) per fiber coil for fixing the coil ends (13) in position.

## Revendications

1. Tachymètre à fibre optique pour la mesure de vitesses de rotation, essentiellement constitué d'organes fonctionnels électriques, optiques et électro-optiques reliés les uns aux autres par des guides d'ondes lumineuses, ainsi que par une source lumineuse (3) et par au moins une bobine de fibre optique (12) et dans le cas duquel des organes fonctionnels optiques constitués du coupleur (5) et du diviseur de faisceau (7) ainsi que des organes fonctionnels électro-optiques constitués du détecteur (4) et du modulateur (9) sont intégrés sur un substrat (2),
caractérisé par le fait que sur le substrat (2), comme organe fonctionnel optique, en plus d'au moins un polariseur (6) et de la source lumineuse (3) est en outre intégré un organe fonctionnel électro-optique,
que le substrat (2) est constitué de silicium,
que les organes fonctionnels optiques adaptés, en ce qui concerne leurs champs de modes, aux guides d'ondes de la bobine de fibre optique (12) (diviseur de faisceau 7, branche 8), sont constitués de guides d'ondes en SiO₂ dopés au phosphore ou au germanium et que les organes fonctionnels optiques adaptés au champ de modes de la source lumineuse (3) (coupleur 5) sont constitués de guides d'ondes en Si₃N₄,
que le polariseur (6) disposé entre les organes fonctionnels coupleur (5) et diviseur de faisceau (7), est constitué de Si₃N₄ ou SiO₂,
et que le modulateur (9) est constitué de germanium diffusé dans le substrat (2) ou ayant crû par croissance épitaxiale, ou d'un cristal mixte Si-Ge.

2. Tachymètre à fibre optique selon la revendication 1, caractérisé par le fait que sont intégrés sur le substrat (2), reliés les uns aux autres par des guides d'ondes lumineuses, une source lumineuse (3), plusieurs détecteurs (4) et au moins un coupleur 3x3 (18).

3. Tachymètre à fibre optique selon la revendication 1, caractérisé par le fait que sont intégrés sur le substrat (2), liés les uns aux autres par des guides d'ondes lumineuses, une source lumineuse (3), au moins un détecteur (4), un coupleur (5 ou 18), au moins un polariseur (6), au moins un diviseur de faisceau (7) et plusieurs modulateurs (9).

4. Tachymètre à fibre optique selon l'une des revendications 1 à 3, caractérisé par le fait que sur le substrat (2) est en outre intégré au moins un organe fonctionnel électrique.

5. Tachymètre à fibre optique selon l'une des revendications 1 à 4, caractérisé par le fait que le substrat (2) contient une fosse de montage avec source lumineuse hybride intégrée (3).

6. Tachymètre à fibre optique selon l'une des revendications 1 à 4, caractérisé par le fait que la source lumineuse (3) est constituée de couches de puits quantiques multiples obtenus par croissance épitaxiale sur le substrat (2).

7. Tachymètre à fibre optique selon la revendication 1, caractérisé par le fait que le substrat (2) présente, aux interfaces pour le couplage, au moins une bobine de fibre optique (12), et, par bobine, deux rainures (10) pour la fixation mécanique des extrémités (13) des bobines.
